Europäisches Patentamt

(19) European Patent Office

Office européen des brevets

(11) Veröffentlichungsnummer: **0 136 579**
**A1**

(12) # EUROPÄISCHE PATENTANMELDUNG

(21) Anmeldenummer: **84110522.4**

(22) Anmeldetag: **04.09.84**

(51) Int. Cl.⁴: **G 05 B 19/10**

(30) Priorität: **07.09.83 DE 3332304**

(43) Veröffentlichungstag der Anmeldung:
**10.04.85 Patentblatt 85/15**

(84) Benannte Vertragsstaaten:
**AT BE CH DE FR GB IT LI NL SE**

(71) Anmelder: **Siemens Aktiengesellschaft
Berlin und München Wittelsbacherplatz 2
D-8000 München 2(DE)**

(72) Erfinder: **Herkert, Hans, Dipl.-Ing.
Kurzweg 3
D-8021 Schäftlarn(DE)**

(72) Erfinder: **Stenzel, Johann, Dipl.-Ing.
Amselstrasse 5
D-8311 Vilsheim(DE)**

(54) Schaltungsanordnung mit wenigstens einem auf vorgegebene Betriebswerte einstellbaren Mikrocomputer.

(57) Schaltungsanordnung mit wenigstens einem mittels einer Einstellvorrichtung auf vorgegebene Betriebswerte einstellbaren Mikrocomputer (1), der wenigstens einen Speicher (12) zum Speichern von Betriebswerten enthält. Eine solche Schaltungsanordnung soll sich in einfacher Weise auf neue Betriebswerte einstellen lassen. Die Einstellvorrichtung soll dabei ohne mechanische Schalter auskommen. Dies wird dadurch erreicht, daß der einstellbare Mikrocomputer (1) Betriebswerte, die in einen als Einstellcomputer dienenden weiteren Mikrocomputer (2) eingegeben werden, übernimmt und selbst in einen elektrischen Speicher (12) einschreibt, dessen Speicherinhalt bei Ausfall der Versorgungsspannung nicht verloren geht. Als elektrischer Speicher (12) dient insbesondere ein EEPROM. Die Schaltungsanordnung läßt sich besonders vorteilhaft in Stationen von Fernwirkeinrichtungen verwenden.

EP 0 136 579 A1

./...

FIG 1

SIEMENS AKTIENGESELLSCHAFT   Unser Zeichen 0136579
Berlin und München          VPA   83 P 1654 E

## Schaltungsanordnung mit wenigstens einem auf vorgegebene Betriebswerte einstellbaren Mikrocomputer

Die Erfindung bezieht sich auf eine Schaltungsanordnung mit wenigstens einem mittels einer Einstellvorrichtung auf vorgegebene Betriebswerte einstellbaren Mikrocomputer, der wenigstens einen Speicher zum Speichern von Betriebswerten enthält. Derartige Schaltungsanordnungen können insbesondere in Einrichtungen der Fernwirktechnik, vorzugsweise als Stationen, Einrichtungen zur Ablaufsteuerung usw. Verwendung finden.

Eine derartige Schaltungsanordnung ist bereits aus der DE-OS 31 10 600 bekannt. Bei der bekannten Schaltungsanordnung ist eine Signaleingabeeinrichtung, die einen Mikroprozessor enthält, mit einem Codierschalter versehen, der über einen abfragbaren Port an einen Datenbus angeschlossen ist.

Derartige einstellbare Schalter, insbesondere sogenannte DIL-Schalter (Dual-in-line-Schalter) liefern der Schaltungsanordnung die charakteristischen Betriebswerte wie Bitrate eines Senders oder Empfängers, die Adresse einer Fernwirkstation usw. Die Schalter werden vom Mikrocomputer in bestimmten Warteschleifen regelmäßig über dafür vorgesehene EA-Ports abgefragt. Zum Einstellen solcher Betriebswerte benötigt man jedoch für jede Baugruppe ein Montageschaltbild und eine Einstellanweisung.

Anstelle derartiger Schalter können Halbleiterspeicher vorgesehen werden. Z.B. können EPROMs Verwendung finden, die dem jeweiligen Anwendungsfall entsprechend programmiert bzw. ausgewählt sind.

Wd 1 EM / 1.9.83

Verwendet man als Speicher für die Betriebswerte ein EPROM, d.h. einen Lesespeicher, der elektrisch gesetzt wird und nur mit UV-Licht gelöscht werden kann, so ergibt sich eine besonders große Zuverlässigkeit, die mit mechanischen Schaltern nicht ohne weiteres erreicht werden kann. Allerdings ist es dann bei einer nachträglichen Änderung von Betriebswerten erforderlich, die Information im EPROM zu löschen und eine neue Information einzuschreiben. Da dies nicht ohne weiteres in der betreffenden Baugruppe möglich ist, ist hierzu ein Aus- und Einbau erforderlich, wodurch sich erhebliche Schwierigkeiten ergeben können.

Aufgabe der Erfindung ist es, eine Schaltungsanordnung der eingangs genannten Art derart auszubilden, daß die Einstellvorrichtung zur Einstellung des Mikrocomputers auf vorgegebene Betriebswerte möglichst ohne mechanische Schalter auskommt und sich die Schaltungsanordnung in einfacher Weise auf neue Betriebswerte einstellen läßt.

Gemäß der Erfindung wird die Schaltungsanordnung zur Lösung dieser Aufgabe derart ausgebildet, daß der Speicher zum Speichern der Betriebswerte als ein elektrischer Speicher, dessen Speicherinhalt elektrisch variierbar ist, und der seinen Speicherinhalt bei Ausfall der Versorgungsspannung nicht verliert, ausgebildet ist und daß der Mikrocomputer mittels eines daran anschließbaren weiteren Mikrocomputers durch Anschalten des weiteren Mikrocomputers an eine Eingangs-Ausgangs-Schnittstelle mittels eines Steuersignals derart steuerbar ist, daß der einstellbare Mikrocomputer in den weiteren Mikrocomputer eingegebene Betriebswerte übernimmt und selbst in den elektrischen Speicher einschreibt.

Das Steuersignal, das den einzustellenden Mikrocomputer veranlaßt, in das Einstellprogramm zu springen, kann eine

0136579

an die Eingangs-Ausgangs-Schnittstelle angelegte, nicht
anderweitig belegte Adresse oder ein an einen Interrupt-
Eingang gelegter Interrupt sein.

Durch diese Maßnahmen wird erreicht, daß der Mikrocomputer auf Anordnung von außen seine Betriebswerte selbst
einstellt oder verändert. In vorteilhafter Weise können
dabei in Verbindung mit einem besonders einfach zu handhabenden Einstellverfahren elektrische Speicher mit geringer Ausfallrate Verwendung finden.

Als elektrischer Speicher, dessen Speicherinhalt elektrisch variierbar ist und der seinen Speicherinhalt bei
Ausfall der Versorgungsspannung nicht verliert, kann insbesondere ein EEPROM oder ein mit Hilfe einer Batterie
gepuffertes RAM, insbesondere ein CMOS-RAM Verwendung
finden. Das EEPROM (Electrically Erasable Programmable
Read Only Memory) ist ein Lesespeicher, dessen Speicherplätze elektrisch gelöscht und wieder mit neuen Informationen beschrieben werden können. Bei Spannungsausfall
geht die Information nicht verloren.

Die Schaltungsanordnung ist vorzugsweise Bestandteil einer Fernwirkeinrichtung oder einer anderen komplexen
Signalübertragungs- und/oder Verarbeitungseinrichtung
und als solche zusammen mit weiteren Baueinheiten in eine
Aufnahmevorrichtung einsetzbar. Die elektrischen Anschlüsse, die die Verbindung mit einer Gestell- oder
Einsatzverdrahtung herstellen, befinden sich in diesem
Fall zweckmäßigerweise auf der Rückseite der Baueinheit.

In weiterer Ausgestaltung der Erfindung läßt sich der
einstellbare Mikrocomputer ohne mechanische oder elektrische Trennung von einer Gesamtanordnung dadurch mit
dem weiteren Mikrocomputer verbinden, daß zum Anschluß
des weiteren Mikrocomputers an den einstellbaren Mikrocomputer ein eigener Steckverbinder vorgesehen ist und daß eine Hälfte des Steckverbinders auf der Frontseite des einstellbaren Mikrocomputers ist. Insbesondere braucht die Mikrocomputer-Baugruppe nicht aus einem Einsatz gezogen zu werden.

Zweckmäßigerweise ist ein Interrupt-Eingang des Mikrocomputers an einen Anschluß des Steckverbinders geführt, dessen zugeordneter Anschluß im weiteren Mikrocomputer mit Interrupt-Potential (Masse) beaufschlagt ist. Dabei ergibt sich, daß beim Aufsetzen des weiteren Mikrocomputers auf den einzustellenden Mikrocomputer der einzustellende Mikrocomputer selbsttätig auf das Einstellprogramm springt.

Zweckmäßigerweise enthält der Mikrocomputer eine Umschaltevorrichtung, mit deren Hilfe der serielle Eingang und der serielle Ausgang eines EA-Ports an den Eingang bzw. Ausgang eines EA-Ports des weiteren Mikrocomputers anschaltbar sind.

Sind in Weiterbildung der Erfindung ein Interrupt-Eingang des Mikroprozessors des Mikrocomputers und ein Steuereingang der Umschaltevorrichtung an einen gemeinsamen Anschluß des Steckverbinders angeschlossen, so ergibt sich der Vorteil, daß beim Aufsetzen des weiteren Mikrocomputers auf den einzustellenden Mikrocomputer die Anordnung selbsttätig in einen Zustand übergeht, in dem ohne besondere Vorbereitungen sofort mit dem Einstellverfahren begonnen werden kann.

Ein besonders geringer Aufwand für den weiteren Mikrocomputer und besonders kleine Abmessungen des weiteren Mikrocomputers lassen sich dadurch erzielen, daß der weitere Mikrocomputer zusätzlich zum Signaleingang und zum Signalausgang auch mit seinen Stromversorgungsanschlüssen

**0136579**

und/oder mit einem Takteingang über den Steckverbinder an den einstellbaren Mikrocomputer anschließbar ist, so daß eine eigene Batterie nicht erforderlich ist und der weitere Mikrocomputer und der einzustellende Mikrocomputer immer die gleiche Bitrate haben.

Zweckmäßigerweise ist der weitere Mikrocomputer mit einem Tasten- und Anzeigefeld versehen. Vorzugsweise ist dieses in der bei Taschenrechnern üblichen Weise angeordnet und/oder ausgebildet.

Die Schaltungsanordnung ist insbesondere Bestandteil einer Fernwirkeinrichtung. Besonders zweckmäßig ist eine Anordnung des ersten Mikrocomputers in einer Einrichtung zur Ablaufsteuerung, in einem Datenspeicher in einer Signaleingabeeinrichtung, in einer Signalausgabeeinrichtung und/oder in einem A/D-Wandler. Dabei sind die einstellbaren Betriebswerte des Mikrocomputers insbesondere eine Bitrate, eine Staffelzeitlänge, eine Staffelzeitnummer, ein Zyklusende und/oder ein Adressenbereich.

Die Erfindung wird anhand der in den Figuren dargestellten Ausführungsbeispiele näher erläutert.

Es zeigen

Fig. 1 einen Mikrocomputer, dessen Betriebswerte mit Hilfe eines weiteren Mikrocomputers einstellbar sind und

Fig. 2 ein Beispiel für den nach Fig. 1 vorgesehenen Umschalter.

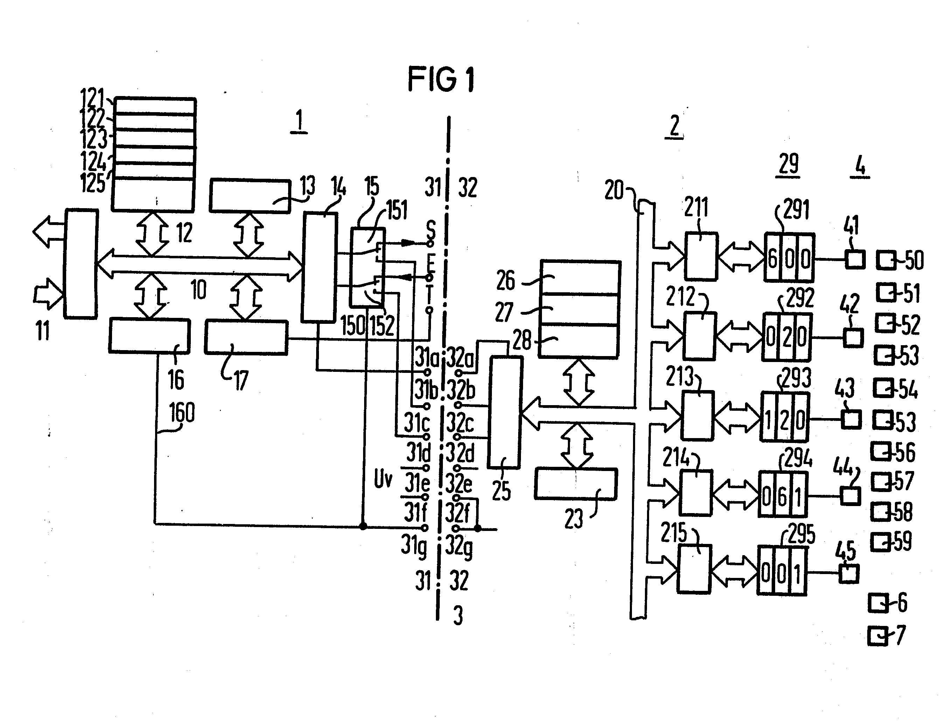

Die in Fig. 1 gezeigte Schaltungsanordnung enthält den Mikrocomputer 1, an den der als Einstellcomputer dienende weitere Mikrocomputer 2 angeschlossen ist. Der Mikrocomputer 1 dient als Einrichtung zur Ablaufsteuerung in einer nicht näher dargestellten Station einer Fernwirkeinrichtung.

Die Einrichtung 1 zur Ablaufsteuerung enthält den Mikroprozessor 16, der zusammen mit dem EEPROM 12, dem RAM 13
und dem Timer 17 an den Datenbus 10 angeschlossen ist.
Der Datenbus 10 ist darüber hinaus an den Parallel-Parallel-EA-Port 11 und den Parallel-Seriell-EA-Port 14 geführt. Der EA-Port 11 besitzt einen parallelen Eingang
und einen parallelen Ausgang zum Anschluß einer Datenverarbeitungseinrichtung. Anstelle des Parallel-Parallelen EA-Ports kann auch ein Parallel-Serieller EA-Port
verwendet werden.

Der EA-Port 14 ist mit seinem seriellen Ausgang an den
Scheitel des Umschalters 151 und mit seinem seriellen
Eingang an den Scheitel des Umschalters 152 angeschlossen. Die Umschalter 151 und 152 bilden die Umschalteeinheit 15, die durch ein an ihren Steuereingang 150 gelegtes Steuersignal steuerbar ist. Die gezeigte Schalterstellung entspricht dem Fall, daß der Steuereingang 150
nicht mit Erde bzw. Bezugspotential verbunden ist. In
diesem Zustand ist der EA-Port 14 an die Anschlüsse S
für "Text Senden" und E für "Text Empfangen" verbunden.

Der Steuereingang 150 der Umschalteeinheit 15 und der
Interrupteingang 160 des Mikroprozessors 16 sind zusammen
an den Anschluß 31g der auf seiten der Einrichtung 1 gelegenen Hälfte 31 des Steckverbinders 3 geführt. Die auf
seiten des weiteren Mikrocomputers 2 gelegene Hälfte 32
des Steckverbinders 3 ist mit dem entsprechenden Anschluß 32g unmittelbar an Masse bzw. Bezugspotential geführt.

Werden die beiden Mikrocomputer 1 und 2 über den Steckverbinder 3 miteinander verbunden, so werden die Umschalter 151 und 152 betätigt. In dieser Schalterstellung ist der serielle Ausgang des EA-Ports 14 mit dem Anschluß 31b und der serielle Eingang des EA-Ports 14 mit dem Anschluß 31c der Hälfte 31 des Steckverbinders 3 verbunden.

Der Taktausgang T des Timers 17 führt zum EA-Port 14 und zum Anschluß 31a der Hälfte 31 des Steckverbinders 3. Im EA-Port 14 bestimmt der Takt die Bitrate des Mikrocomputers 1.

Das im EEPROM 12 des Mikrocomputers 1 abgespeicherte Programm bestimmt die Aufgabe der Einrichtung zur Ablaufsteuerung. Im EEPROM 12 sind zusätzlich zu diesem Programm insbesondere folgende Betriebswerte in Form von Einstellbytes gespeichert: Eine Bitrate, eine Staffelzeitlänge, eine Staffelzeitnummer, ein Zyklusende und ein Adreßbereich.

In Abwandlung der gezeigten Anordnung können anstelle des EEPROMs 12 gegebenenfalls ein EEPROM und ein EPROM zusammen verwendet werden. Dabei können wenigstens ein Teil des Programms im EPROM und die Betriebswerte im EEPROM gespeichert werden.

Im gezeigten Beispiel sind in den fünf höchsten Bytes des EEPROMs 12 die Betriebswerte gespeichert, und zwar in den Bytes 2043 bis 2047. Diese werden vom Mikrocomputer genauso ausgelesen, wie mechanische Schalter, die bei üblichen Mikrocomputern zur Speicherung der Betriebswerte dienen.

Um das Löschen und neue Einschreiben der Betriebswerte in dem EEPROM 12 selbst durchführen zu können, hat der Mikrocomputer 1 ein kleines Einstellprogramm. Im gezeigten Beispiel schließt sich dies im EEPROM 12 an die Einstellbytes an. Es kann gegebenenfalls in einen eigenen Speicher gespeichert sein.

0136579

Zur Änderung eines Einstellbytes adressiert der Mikrocomputer dieses Einstellbyte, bietet das neue Bitmuster
an den Datenbus an und legt eine Spannung an einen bestimmten Pin des EEPROMs 12. Das neue Bitmuster wird in
den adressierten Speicherplatz eingeschrieben, der auch
bei Spannungsausfall seinen Wert nicht mehr verliert.

Der Mikrocomputer 1 enthält die einzuschreibenden bzw.
neu einzuschreibenden Betriebswerte vom Mikrocomputer 2.
Die Mikrocomputer 1 und 2 sind nur während des Einstellverfahrens elektrisch, insbesondere auch mechanisch, miteinander verbunden.

Das Auslesen und Einschreiben der Betriebswerte in das
EEPROM 12 wird über den Mikrocomputer 2 gesteuert, der
mit einem Tasten- und Anzeigefeld versehen ist. Zu diesem
Zweck läßt sich der weitere Mikrocomputer 2, der nach
Art eines Taschenrechners ausgebildet ist, an den Mikrocomputer 1 anschließen. Fig. 1 zeigt den Betriebszustand,
bei dem der Mikrocomputer 2 über den 6-poligen Steckverbinder 3 mit dem Mikrocomputer 1 verbunden ist.

Der Mikrocomputer 2 enthält den Mikroprozessor 26, der zusammen mit dem Timer 27 und dem EPROM 28 an den Datenbus
20 angeschlossen ist. Am Datenbus 20 liegen darüber hinaus
das RAM 23 und die Ports 211 bis 215 und der Parallel-
Serielle-EA-Port 25.

Der EA-Port 25 ist mit seinem seriellen Eingang an den
Anschluß 32b, mit seinem seriellen Ausgang an den Anschluß 32c und mit seinem Takteingang an den Anschluß 32a
der Hälfte 32 des Steckverbinders 3 geführt.

Über die Anschlußpaare 31d,31e und 32d,32e des Steckverbinders 3 läßt sich der Stromversorgungseingang des Mikrocomputers 2 an die Versorgungsspannung $U_v$ des Mikrocomputers 1 anschließen.

Der Port 211 ist mit der Ziffernanzeigeeinrichtung 291 für die Bitrate, der Port 212 mit der Ziffernanzeigeeinrichtung 292 für die Staffelzeitlänge, der Port 213 mit der Anzeigeeinrichtung 293 für die Staffelzeitnummer, der Port 214 mit der Ziffernanzeigeeinrichtung 294 für das Zyklusende und der Port 215 mit der Ziffernanzeigeeinrichtung 295 für den Adreßbereich verbunden. Den Ziffernanzeigeeinrichtungen 291 bis 295 sind die Tasten 41 bis 45 des Tastenfeldes 4 zugeordnet. Dabei läßt sich mit jeweils einer Taste die zugehörige Ziffernanzeigeeinrichtung aktivieren, z.B. mit Hilfe der Taste 41 die Ziffernanzeigeeinrichtung 291.

Das Tastenfeld 4 enthält ferner zehn Zifferntasten 50 bis 59 für die Ziffern 0 bis 9, die Schreibtaste 6 und die Lesetaste 7.

Wird der Mikrocomputer 2 an den Mikrocomputer 1 angeschlossen, so legt Pol 31g,32g einen Interrupt an den Mikrocomputer 1 und schaltet die serielle Schnittstelle des EA-Ports 15 auf den Mikrocomputer 2, wobei die Pole 31b und 31c zum seriellen Informationsaustausch der beiden Mikrocomputer 1 und 2 dienen. Über die Pole 31e,32e und 31f und 32f ist der Mikrocomputer 2 an die Versorgungsspannung $U_v$ des Mikrocomputers 1 angeschlossen. Der Pol 31a,32a liefert dem Mikrocomputer 2 den Takt von dem Mikrocomputer 1.

Der Mikrocomputer 1 springt, nach Verbindung mit dem Mikrocomputer 2, durch den Interrupt an Pol 31g,32g in das Einstellprogramm und übergibt in einem festgelegten Rhythmus mit asynchronen oder synchronen Zeichen dem Mikrocomputer 2 die im EEPROM 12 gespeicherten bzw. eingestellten Betriebswerte. Diese werden beim Drücken der Lesetaste 7 von der Ziffernanzeigevorrichtung 29 angezeigt.

0136579

Die Betriebswerte werden mit dem Tastenfeld 5 wie bei einem Taschenrechner in die Vorrichtung 29 zur Ziffernanzeige eingegeben. Durch Drücken einer der Eingabetasten 41 ... 45 wird bestimmt, an welcher der Ziffernanzeigevorrichtungen 291 ... 295 die eingetasteten Werte angezeigt werden.

Durch Drücken der Schreibtaste 6 gibt der Mikrocomputer 2 mit asynchronen oder synchronen Zeichen die in der Ziffernanzeigevorrichtung 29 angezeigten und gespeicherten Betriebswerte an den Mikrocomputer 1, der daraufhin die Bitmuster der Einstellbytes in seinem EEPROM 12 ändert. Die geänderten Werte können durch Drücken der Lesetaste 7 ausgelesen werden und müssen mit den in der Ziffernanzeigevorrichtung eingestellten Werten übereinstimmen.

Nach Abtrennen des Mikrocomputers 2 vom Mikrocomputer 1 fällt der Mikrocomputer 1 in sein Hauptprogramm zurück, weil der Interrupt an Pol 31f verschwindet. Die Einrichtung zur Ablaufsteuerung ist dann mit ihren neuen Betriebswerten im Fernwirknetz voll einsatzfähig.

Zweckmäßigerweise ist die Baugruppe, die den Mikrocomputer 1 enthält, insbesondere zusammen mit weiteren Baugruppen in einer Aufnahmevorrichtung gehaltert und an eine rückwärtige Einsatzverdrahtung angeschlossen. Wird der Mikrocomputer 2 auf die Frontseite der Baugruppe aufgesetzt, so können die Betriebswerte des Mikrocomputers 1 ausgelesen und geändert werden, ohne daß die Baugruppe, in der der Mikrocomputer 1 untergebracht ist, aus dem Einsatz gezogen wird.

Der Mikrocomputer 1 bildet insbesondere eine Einrichtung zur Ablaufsteuerung. Weitere vorteilhafte Ausgestaltungen des Mikrocomputers 1 bestehen in einer Ausbildung als Übertragungsteil oder Datenspeicher, Signalein- und -aus-

0136579

gabeeinrichtung oder als A/D-Wandler.

Die Mikrocomputer-Ablaufsteuerung bildet den digitalen
Kern jeder Station oder Zentrale eines Fernwirksystems.
Sie steuert den Abfragezyklus der Zentrale und bildet
die Antwort- oder Spontantelegramme in den Stationen. Die
Programme der Ablaufsteuerungen sind in den Zentralen und
Stationen wegen unterschiedlicher Aufgaben auch verschieden. Über die DIL-Schalter werden folgende Betriebsarten
eingestellt:

Die Bitrate. Sie muß im Fernwirknetz gleich sein.

Die Staffelzeitlänge. Innerhalb dieser Zeitspanne muß auf
ein Abfragetelegramm ein Antworttelegramm folgen. Sonst
wird die abgefragte Station als gestört gemeldet.

Die Staffelzeitnummer. Dies ist eine Zahl, die in der
Zentrale bestimmt, nach wie viel Staffelzeitlängen das
nächste Abfragetelegramm folgt oder in der Station, wann
ein Spontantelegramm gesendet werden darf.

Zyklusende. Dieses ist identisch mit der letzten Adresse
im Fernwirknetz.

Eigenadresse. Dies ist die individuelle Adresse jeder
Station.

Ein adressenselektiver Datenspeicher, der sich auf Adressenbereiche einstellen läßt und Telegramminhalte in Abhängigkeit von der Adresse eines Telegrammes weitergibt
oder sperrt, ist in der DE-OS 31 10 614 beschrieben.

Eine Signaleingabeeinrichtung, die auf verschiedene
Staffelzeiten einstellbare Staffelzeitzähler enthält,
geht aus der DE-OS 31 10 600 hervor.

Bei A/D-Wandlern, die analoge Meßwerte in digitale Signale umwandeln und zur weiteren Verarbeitung oder Übertragung bereitstellen, kann es zweckmäßig sein, eine Signalabgabe vom Überschreiten oder Nichtüberschreiten vorgegebener Grenzwerte abhängig zu machen.

Im gezeigten Beispiel können die folgenden Schaltkreise Verwendung finden:

10: 74LS374; 11: 74LS244; 12: 2816A; 13: 2K x 8 CMOS-RAM: HM6116 (Hitachi), TC5516 (Toshiba); 14: 8251; 15: 74LS00; 16: 8085; 17: 8253/8254; 25: 8251; 26: 80C85; 27: 82C53; 28: 27C32; 29: DL1414.

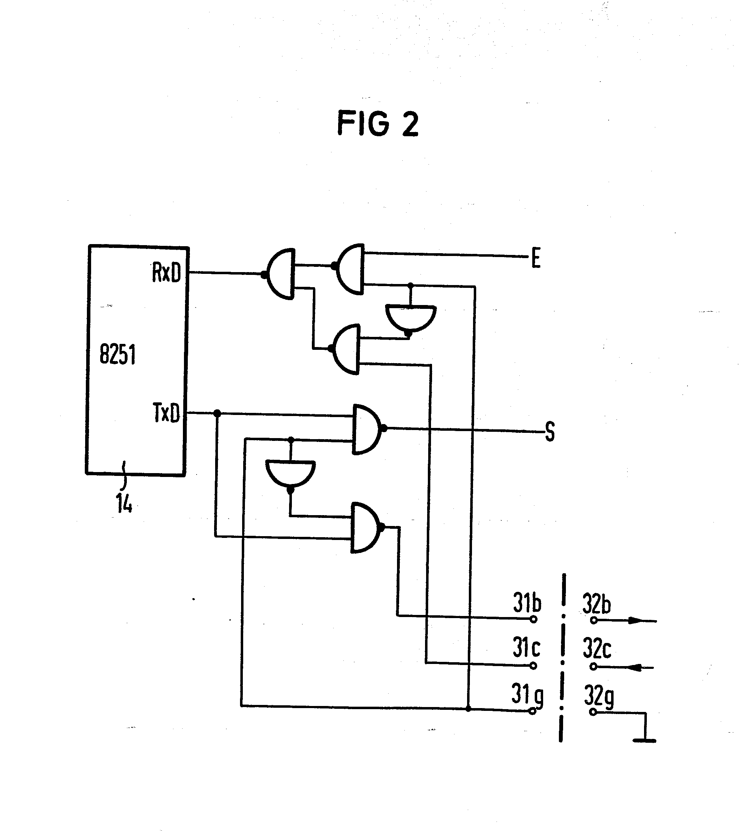

Der Schaltkreis 15 ist dabei in der in Fig. 2 gezeigten Weise zu verwenden. Die Bezeichnungen stimmen mit denen nach Fig. 1 bzw. denen des Schaltkreises 74LS00 überein.

10 Patentansprüche
2 Figuren

Patentansprüche

1. Schaltungsanordnung mit wenigstens einem mittels einer Einstellvorrichtung auf vorgegebene Betriebswerte einstellbaren Mikrocomputer, der wenigstens einen Speicher zum Speichern von Betriebswerten enthält, d a d u r c h   g e k e n n z e i c h n e t, daß der Speicher zum Speichern der Betriebswerte als ein elektrischer Speicher, dessen Speicherinhalt elektrisch variierbar ist, und der seinen Speicherinhalt bei Ausfall der Versorgungsspannung nicht verliert, ausgebildet ist und daß der Mikrocomputer (1) mittels eines daran anschließbaren weiteren Mikrocomputers (2) durch Anschalten des weiteren Mikrocomputers (2) an eine Eingangs-Ausgangs-Schnittstelle mittels eines Steuersignals derart steuerbar ist, daß der einstellbare Mikrocomputer (1) in den weiteren Mikrocomputer (2) eingegebene Betriebswerte übernimmt und selbst in den elektrischen Speicher (12) einschreibt.

2. Schaltungsanordnung nach Anspruch 1, d a d u r c h   g e k e n n z e i c h n e t, daß zum Anschluß des weiteren Mikrocomputers (2) an den einstellbaren Mikrocomputer (1) ein eigener Steckverbinder (3) vorgesehen ist und daß eine Hälfte des Steckverbinders (3) auf der Frontseite des einstellbaren Mikrocomputers (1) angeordnet ist.

3. Schaltungsanordnung nach Anspruch 1 oder 2, d a d u r c h   g e k e n n z e i c h n e t, daß ein Interrupt-Eingang (16) des Mikrocomputers (1) an einen Anschluß (31g) des Steckverbinders (3) geführt ist, dessen zugeordneter Anschluß (32g) im weiteren Mikrocomputer (2) mit Interrupt-Potential (Masse) beaufschlagt ist.

0136579

4. Schaltungsanordnung nach einem der Ansprüche 1 bis 3,
d a d u r c h   g e k e n n z e i c h n e t ,
daß der Mikrocomputer (1) eine Umschaltevorrichtung (15)
enthält, mit deren Hilfe der serielle Eingang und der
serielle Ausgang eines EA-Ports (14) an den Eingang bzw.
Ausgang eines EA-Ports (28) des weiteren Mikrocomputers
(2) anschaltbar sind.

5. Schaltungsanordnung nach dden Ansprüchen 3 und 4,
d a d u r c h   g e k e n n z e i c h n e t ,
daß ein Interrupt-Eingang (160) des Mikroprozessors (16)
des Mikrocomputers (1) und ein Steuereingang (150) der
Umschaltevorrichtung (15) an einen gemeinsamen Anschluß
(31g) des Steckverbinders (3) angeschlossen sind.

6. Schaltungsanordnung nach einem der Ansprüche 1 bis 5,
d a d u r c h   g e k e n n z e i c h n e t ,
daß der weitere Mikrocomputer (2) zusätzlich zum Signaleingang und zum Signalausgang auch mit seinen Stromversorgungsanschlüssen und/oder mit einem Takteingang über
den Steckverbinder (3) an den einstellbaren Mikrocomputer
(1) anschließbar ist.

7. Schaltungsanordnung nach einem der Ansprüche 1 bis 5,
d a d u r c h   g e k e n n z e i c h n e t ,
daß der weitere Mikrocomputer (2) mit einem Tasten- und
Anzeigefeld (4,5,6,7,29) versehen ist.

8. Schaltungsanordnung nach Anspruch 7,
d a d u r c h   g e k e n n z e i c h n e t ,
daß das Tasten- und Anzeigefeld (4,5,6,7,29) in der bei
Taschenrechnern üblichen Weise angeordnet und/oder ausgebildet sind.

9. Schaltungsanordnung nach einem der Ansprüche 1 bis 8,
g e k e n n z e i c h n e t   d u r c h

eine Anordnung des ersten Mikrocomputers (1) in einer
Einrichtung zur Ablaufsteuerung, in einem Datenspeicher,
in einer Signaleingabeeinrichtung und/oder in einem A/D-
Wandler.

10. Schaltungsanordnung nach Anspruch 9,
d a d u r c h   g e k e n n z e i c h n e t ,
daß die einstellbaren Betriebswerte des Mikrocomputers
(1) eine Bitrate, eine Staffelzeitlänge, eine Staffelzeitnummer, ein Zyklusende und/oder ein Adressenbereich
sind.

FIG 1

1

2

29    4

1/2

0136579

# FIG 2

Europäisches
Patentamt

**EUROPÄISCHER RECHERCHENBERICHT**

**0136579**
Nummer der Anmeldung

EP 84 11 0522

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | FR-A-2 357 904 (HELIOWATT)<br>* Insgesamt * | 1,2,10 | G 05 B 19/10 |
| X | PATENTS ABSTRACTS OF JAPAN, Band 6, Nr. 179, 14. September 1982, Seite 102P142; & JP - A - 57 94803 (HITACHI SEISAKUSHO K.K.) 12-06-1982 | 1,7,8 | |
| | | | **RECHERCHIERTE SACHGEBIETE (Int. Cl.4)**<br><br>G 05 B<br>G 06 F |

Der vorliegende Recherchenbericht wurde für alle Patentansprüche erstellt.

| Recherchenort<br>DEN HAAG | Abschlußdatum der Recherche<br>20-11-1984 | Prüfer<br>CORNILLIE O.A.R. |
|---|---|---|